# EUROPEAN PATENT SPECIFICATION

(11) **EP 4 257 236 B1**
(45) Date of publication and mention of the grant of the patent: **30.09.2026**
(21) Application number: 22895794.0
(22) Date of filing: 01.08.2022
(51) Int. Cl.: B01J 23/00, B01J 23/02, B01J 21/06, B01J 23/755, B01J 37/02, B01J 37/08, C01B 3/40, B01J 23/63, B01J 23/78, B01J 23/83, B01J 35/64, B01J 37/03

(54) **CATALYST FOR METHANE REFORMING, AND PREPARATION METHOD THEREFOR**
KATALYSATOR ZUR METHANREFORMIERUNG UND HERSTELLUNGSVERFAHREN DAFÜR
CATALYSEUR POUR LE REFORMAGE DU MÉTHANE ET SON PROCÉDÉ DE PRÉPARATION

(30) Priority: 18.11.2021 KR 20210159454
(43) Date of publication of application: 11.10.2023
(73) Proprietor: LG Chem, Ltd., Seoul 07336 (KR)
(72) Inventor: CHO, Jun Yeon, Daejeon 34122 (KR); KIM, Sojin, Daejeon 34122 (KR); KIM, Suji, Daejeon 34122 (KR); CHOI, Jun Seon, Daejeon 34122 (KR); KIM, Sangjin, Daejeon 34122 (KR); CHOI, Jae Soon, Daejeon 34122 (KR)
(74) Representative: Goddar, Heinz J.
(86) International application number: PCT/KR2022/011293
(87) International publication number: WO 2023/090585

(56) References cited:
- EP-A1- 4 245 409
- WO-A1-2023/068497
- CN-B- 107 930 626
- KR-A- 20020 080 387
- KR-A- 20180 127 267
- KR-A- 20180 136 701
- US-A1- 2007 100 190
- US-A1- 2009 286 677
- US-A1- 2020 238 256
- SUDHAKARAN M.S.P: "Dry Reforming of Propane over [gamma]-Al2O3 and Nickel Foam Supported Novel SrNiO3 Perovskite Catalyst", vol. 9, no. 1, 10 January 2019 (2019-01-10), CH, pages 68, XP093163335, ISSN: 2073-4344, Retrieved from the Internet <URL:https://www.mdpi.com/2073-4344/9/1/68/pdf> DOI: 10.3390/catal9010068

## Description

### [Technical Field]

The present application relates to a catalyst for methane reformation and a method for producing the same.

### [Background Art]

As part of activities to reduce greenhouse gases caused by global warming, many studies on carbon dioxide conversion technologies have been conducted. The carbon dioxide reforming reaction, one of the carbon dioxide conversion technologies, is a technology to obtain synthesis gas composed of hydrogen and carbon monoxide by reacting methane and carbon dioxide.

Synthesis gas is a material with high development value from diverse downstream raw materials. As a method for industrially obtaining synthesis gas (H₂/CO), the reforming reaction of natural gas may be largely divided into steam reforming process, carbon dioxide (CO₂) reforming process, catalytic partial oxidation process, autothermal reforming process, tri-reforming process, such as the following Reaction Schemes 1 to 5, and the like.

[Reaction Scheme 1] CH₄ + H₂O → 3H₂ + CO △H = 226 kJ/mol

[Reaction Scheme 2] CH₄ + CO₂ → 2H₂ + 2CO △H = 261 kJ/mol

[Reaction Scheme 3] CH₄ + 0.5O₂ → 2H₂ + CO △H = -44 kJ/mol

[Reaction Scheme 4] autothermal reforming: Reaction Scheme 1 + Reaction Scheme 3

[Reaction Scheme 5] tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that the efficiency of converting natural gas into hydrogen is high, but there is a problem in that the economic feasibility deteriorates because noble metal catalysts are expensive.

Accordingly, nickel catalysts, which have a high hydrogen conversion efficiency and are relatively inexpensive, are usually used in the reforming process. However, in such a case, there is a problem in that the nickel catalyst is deactivated by carbon that is inevitably produced on the surface of the nickel catalyst.

Therefore, there is a need in the art for developing a catalyst which is resistant to carbon deposition and can be effectively applied to the reforming process of methane. US 2007/100 190 A1 relates to a multilayer catalyst for the partial oxidation of hydrocarbons in gaseous phase, comprising a monolithic ceramic or metallic substrate having a solid macroporous structure consisting of one or more structures, on which a first active layer with a crystal-line perovskitic structure is deposited, having general formula AₓA' ₁₋ₓB_{y}B' _{1-Y}O_{3±delta} wherein: A is a cation of at least one of the rare earth elements, A' is a cation of at least one element selected from groups Ia, IIa and VIa of the periodic table of elements, B is a cation of at least one element selected from groups IVb, Vb, VIb, VIIb, or VIII of the periodic table of elements, B' is a cation of at least one element selected from groups IVb, Vb, VIb, VIIb or VIII of the periodic table of elements Mg²⁺ or Al³⁺, x is a number which is such that 0 < =x < =1, y is a number which is such that 0 < =y < =1, and delta is a number which is such that 0 < =delta < =0, 5, a second more external active layer consisting of a dispersion of a noble metal and a possible supporting layer with a large surface area, positioned between said monolithic substrate and said first active layer with a perovskitic structure. US 2007/100 190 A1 also relates to a process for the production of said catalyst and its use for the partial oxidation of hydrocarbons in gaseous phase.
KR 2018 0 136 701 A provides a catalyst for reforming bio-gas which contains a monolithic supporter in a hierarchically porous structure; and a compound represented by chemical formula : Sr_{(1-y)}Y_{y}Ti₍₁₋ₓ₎RuₓO_{(3-δ)}, and deposited on the supporter, wherein in the chemical formula, x is bigger than 0 and smaller than 1; y is bigger than 0 and smaller than 0.1; and δ is 0 or more or 1 or less.

### [Detailed Description of the Invention]

### [Technical Problem]

The present application has been made in an effort to provide a catalyst for methane reformation and a method for producing the same.

### [Technical Solution]

An exemplary embodiment of the present application provides a catalyst for methane reformation, comprising:
a porous metal support;
a first coating layer provided on the porous metal support and comprising an inorganic oxide; and
a second coating layer provided on the first coating layer and comprising a perovskite-based compound represented by the following Chemical Formula 2,

wherein the porous metal support is a metal foam comprising NiFeCrAl or NiCrAl, and
wherein the first coating layer further comprises SrTiO₃; or the inorganic oxide comprise one or more of TiO₂, SiO₂ and ZrO₂:

   [Chemical Formula 2] Sr₁₋ₓAₓTi_{α}B_{y}O_{3-δ}

   In Chemical Formula 2,
   A is selected from Y, Sc, La and lanthanide series elements,
   B is Ni, Co, Fe, Mn, Cr, Mo, Ru or Rh,
   x is a real number of 0 or more and less than 1,
   y is a real number of 0 or more and less than 0.3,
   δ is a real number of 0 or more and less than 1,
   α is a real number of more than 0.7 and 1 or less, and
   (x + y) > 0 is satisfied.

Further, another exemplary embodiment of the present application provides a method for producing a catalyst for methane reformation, the method comprising:
preparing each of a first solution comprising an inorganic oxide or inorganic oxide precursor; and a second solution comprising a precursor of the perovskite-based compound represented by Chemical Formula 2;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process,

wherein the porous metal support is a metal foam comprising NiFeCrAl or NiCrAl, and
wherein the first coating layer further comprises SrTiO₃; or the inorganic oxide comprise one or more of TiO₂, SiO₂ and ZrO₂.

### [Advantageous Effects]

The catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming an inorganic oxide; or a first coating layer comprising the inorganic oxide and a perovskite-based compound represented by the following Chemical Formula 1.

In addition, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

Furthermore, the catalyst for methane reformation according to an exemplary embodiment of the present application is characterized by being able to additionally increase activity because there is a synergistic effect between a coated inorganic oxide and a perovskite-based compound represented by Chemical Formula 2.

Further, the catalyst for methane reformation according to an exemplary embodiment of the present application can exhibit high activity even at a high space velocity during a reforming reaction of methane because it is possible to increase the active surface area of the catalyst.

### [Brief Description of the Drawings]

FIG. 1 is a view illustrating a set of electron microscope photographs of the surface of the catalyst for methane reformation according to Example 1 of the present application.
FIG. 2 is a view illustrating the SEM-EDS mapping results of the catalyst for methane reformation according to Example 17 of the present application.

### [Best Mode]

Hereinafter, the present specification will be described in more detail.

When one member is disposed "on" another member in the present specification, this comprises not only a case where the one member is brought into contact with another member, but also a case where still another member is present between the two members.

When one part "comprises" one constituent element in the present specification, unless otherwise specifically described, this does not mean that another constituent element is excluded, but means that another constituent element may be further comprised.

Currently, in the case of catalysts which are widely used in the field of reformers, generally, powder-type catalysts and pellet-type support catalysts are usually used. Although the powder-type catalysts may have excellent performance due to excellent dispersion degree of the catalyst, it is difficult to directly use the powder-type catalyst in the industry. For example, when a reformer is driven using the powder-type catalyst, the catalyst comes out together with a material produced after the reaction, and in this case, the catalyst in the form of a powder gradually accumulates in the stream tube at the exit portion, and eventually, a phenomenon of blocking the entire tube may occur. Therefore, there is a disadvantage in that the powder-type catalysts cannot be used in the commercial reformers used in the industry.

**In** addition, the pellet-type support catalyst is currently frequently used in industrial reformers. Due to the limitation of the mass transfer rate, the performance deteriorates compared to the powder-type catalyst only in terms of the catalyst performance, but there is an advantage in that the pellet-type support catalyst can be used for a long period of time because a support is used. However, a γ-Al₂O₃ pellet, which is often used as the pellet-type support catalyst, has a weak structural strength, and thus may be easily broken, and accordingly, there is a disadvantage in that a differential pressure in the reactor is generated. Furthermore, since the volume is large due to the characteristics of the pellet-type support catalyst, the volume thereof becomes considerably large when the pellet-type support catalyst is used in a high-capacity reformer. Further, all reforming reactions are sensitive to reaction temperature, but the existing pellet-type catalyst has a disadvantage in that heat is not evenly distributed throughout the reactor due to a large reduction in thermal conductivity. In addition, since the reforming reaction is very fast, in the case of a pellet-type support or an extruded catalyst, the effectiveness factor of the catalyst is 0.3 or less, so that there is a disadvantage in that the utilization of the catalyst deteriorates.

Thus, the present application intended to alleviate a phenomenon of blocking the stream tube, which is a disadvantage of the powder-type, and improve the heat and mass transfer rates which are a common disadvantage of the powder-type and the pellet-type, through a method of coating a porous metal support catalyst having high heat and mass transfer rates with a catalyst. Further, the present application intends to provide a catalyst for methane reformation capable of supporting a large amount of catalyst at one time and suppressing side reactions caused by a binder.

The catalyst for methane reformation according to an exemplary embodiment of the present application comprises: a porous metal support; a first coating layer provided on the porous metal support and comprising an inorganic oxide; and a second coating layer provided on the first coating layer and comprising the perovskite-based compound represented by Chemical Formula 2.

In an exemplary embodiment of the present application, the perovskite-based compound represented by Chemical Formula 1 is a catalyst component-free compound, the perovskite-based compound represented by Chemical Formula 2 is a compound comprising a catalyst component (A and/or B of Chemical Formula 2), and these are different from each other.

In an exemplary embodiment of the present application, Chemical Formula 2 may be represented by the following Chemical Formula 3 or 4.

[Chemical Formula 3] SrTi_{α}B_{y}O_{3-δ}

[Chemical Formula 4] Sr₁₋ₓYₓTi_{α}B_{y}O_{3-δ}

In Chemical Formulae 3 and 4,
B is Ni or Ru,
x is a real number of more than 0 and less than 1,
y is a real number of more than 0 and less than 0.3, and
δ is a real number of more than 0 and less than 1, and
α is a real number of more than 0.7 and 1 or less.

In an exemplary embodiment of the present application, the porous metal support may be composed of a material capable of maintaining thermal stability at a high temperature of 800°C or more.

In an exemplary embodiment of the present application, the porous metal support is a metal foam comprising NiFeCrAl or NiCrAl.

The porous metal support is a support having various shapes, has a small heat capacity and an excellent heat transfer ability, and thus may be molded into a desired shape for use. The form, size and the like of the porous metal support are not particularly limited, and the porous metal support may have a porosity of 10% to 99%, 50% to 96%, and 85% to 96%. The porous metal support may have an average pore size (cell size) of 400 µm to 2,000 µm, and 450 µm to 1,500 µm. When the porous metal support has an average pore size of less than 400 µm, it may be difficult to coat the porous metal support with a precursor solution, and when the porous metal support has an average pore size of more than 2,000 µm, the surface area on which the catalyst can be coated is reduced, so that the average pore size range is not preferred because the range may be disadvantageous in the process. The porous metal support may be appropriately produced by those skilled in the art using methods known in the art, in consideration of the material, pore size, porosity, and the like of the porous metal support. According to an exemplary embodiment of the present application, a porous metal support having various materials, pore sizes, and the like may be applied as in Examples to be described below.

In an exemplary embodiment of the present application, the inorganic oxide comprises one or more of TiO₂, SiO₂, ZrO₂. In addition, the case where the inorganic oxide comprises Al₂O₃ may be disadvantageous in terms of coke production because scattered spots may develop more in the temperature range of a heat treatment process to be described below compared to the case where the inorganic oxide comprises other inorganic oxides, so that it is more preferred that the inorganic oxide comprises one or more of TiO₂, SiO₂ and ZrO₂.

In an exemplary embodiment of the present application, the first coating layer may comprise an inorganic oxide alone, and may also comprise both the perovskite-based compound represented by Chemical Formula 1 and an inorganic oxide.

In an exemplary embodiment of the present application, a total content of the perovskite-based compound represented by Chemical Formula 1 and the inorganic oxide may be 1 wt% to 20 wt%, and 1.5 wt% to 18 wt% based on the total weight of the porous metal support. When the total content of the perovskite-based compound represented by Chemical Formula 1 and the inorganic oxide exceeds 20 wt%, the remaining capacity capable of coating the perovskite-based compound represented by Chemical Formula 2 may be reduced, and accordingly, the aforementioned total weight range is not preferred because the activity of the catalyst may be reduced compared to the volume of the porous metal support. Furthermore, when the total content of the perovskite-based compound represented by Chemical Formula 1 and the inorganic oxide is less than 1 wt%, it may be difficult to obtain the effect caused by the first coating layer because the content is so small.

In an exemplary embodiment of the present application, the weight ratio of the first coating layer : the second coating layer comprising the perovskite-based compound represented by Chemical Formula 2 may be 1 : 1 to 1 : 20, and 1 : 1.1 to 1 : 15. The case where the weight ratio of the first coating layer : the second coating layer comprising the perovskite-based compound represented by Chemical Formula 2 is out of the range is not preferred because the activity of the catalyst may be reduced compared to the volume of the porous metal support.

In an exemplary embodiment of the present application, the (α + y) of Chemical Formula 2 may be 1. Further, in an exemplary embodiment of the present application, the (α + y) of Chemical Formula 2 may be a real number of more than 0.90 and less than 1. In Chemical Formula 2, B such as Ni substitutes a part of Ti, and the theoretical stoichiometric ratio of (α + y) is 1, but when the content of Ti is slightly less than the theoretical stoichiometric ratio during the preparation of the perovskite-based compound represented by Chemical Formula 2, Ti in Chemical Formula 2 may be more easily substituted with B such as Ni.

In an exemplary embodiment of the present application, a content of the perovskite-based compound represented by Chemical Formula 2 may be 3 wt% to 40 wt%, 6 wt% to 35 wt%, and 7 wt% to 30 wt%, based on a total weight of the catalyst for methane reformation. When the content of the perovskite-based compound represented by Chemical Formula 2 is less than 3 wt% based on the total weight of the catalyst for methane reformation, the reactivity may be lowered due to relatively few active sites on the catalyst surface, so the content is not preferred. In addition, when the content of the perovskite-based compound represented by Chemical Formula 2 exceeds 40 wt%, a relatively large amount of the catalyst component is contained compared to the porous metal support, making it difficult to maintain the pore structure, it may not be easy to bond the catalyst component to the porous metal support, and accordingly, the practical benefits of the methane reforming reaction may be reduced.

In an exemplary embodiment of the present application, the first coating layer may be provided on the entire surface on the porous metal support.

In an exemplary embodiment of the present application, at least a portion of the surface of the catalyst for methane reformation may comprise protrusion shapes. The protrusion shape may be spherical, elliptical, or a combination thereof, but is not limited thereto.

In an exemplary embodiment of the present application, the first coating layer comprising the inorganic oxide may serve to fix the coating layer comprising the perovskite-based compound represented by Chemical Formula 2 on the porous metal support. Furthermore, the coating layer comprising the perovskite-based compound represented by Chemical Formula 2 may be present in the form of protrusions on the first coating layer, and accordingly, the performance of the methane reforming reaction may be improved by increasing the reaction surface area of the catalyst.

Further, according to an exemplary embodiment of the present application, by simultaneously applying the first coating layer comprising the inorganic oxide; and the second coating layer comprising the perovskite-based compound represented by Chemical Formula 2, the total content of catalyst supported on the porous metal support may be increased compared to when catalyst particles are applied alone. **In** addition, according to an exemplary embodiment of the present application, the durability and performance of the catalyst may be improved because it is possible to prevent a phenomenon in which a metal (Ni, Cr, and the like) that is the main component of the porous metal support is exposed to the surface in the form of a metal oxide (NiO, Cr₂O₃, and the like) under long-term operation conditions at high temperature (750°C or higher) and prevent the changes in component proportion or phase of the catalyst of Chemical Formula 2 by applying the first coating layer comprising the inorganic oxide.

**In** an exemplary embodiment of the present application, the catalyst for methane reformation may be applied to a steam reforming process, a carbon dioxide (CO₂) reforming process, a catalytic partial oxidation process, an autothermal reforming process, a tri-reforming process or a mixed reforming process, and the methane reforming process is not particularly limited.

The method for producing a catalyst for methane reformation according to an exemplary embodiment of the present application comprises: preparing each of a first solution comprising an inorganic oxide or inorganic oxide precursor; and a second solution comprising a precursor of the perovskite-based compound represented by Chemical Formula 2; producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process, wherein the porous metal support is a metal foam comprising NiFeCrAl or NiCrAl, and wherein the first coating layer further comprises SrTiO₃; or the inorganic oxide comprise one or more of TiO₂, SiO₂ and ZrO₂.

In the method for producing a catalyst for methane reformation according to an exemplary embodiment of the present application, the first solution may further comprise a precursor of the perovskite-based compound represented by Chemical Formula 1.

In the method for producing a catalyst for methane reformation according to an exemplary embodiment of the present application, details on the porous metal support, the perovskite-based compound represented by Chemical Formula 1, the inorganic oxide, the perovskite-based compound represented by Chemical Formula 2, and the like are the same as those as described above.

In particular, the solution comprising the precursor of the perovskite-based compound represented by Chemical Formula 1 and the solution comprising the precursor of the perovskite-based compound represented by Chemical Formula 2 may be each applied in the form of a sol or gel. Furthermore, the first solution comprising the inorganic oxide may be provided in the form of not only a particle dispersion, but also a sol or gel of a solution comprising an inorganic oxide precursor.

The precursor of the perovskite-based compound is a precursor of the metal constituting the perovskite-based compound, and the metal molar ratio of the perovskite-based compound may be adjusted by adjusting the content thereof. In addition, the precursor of the metal is not particularly limited, and ammonium salts, nitrates, carbonates, chlorides, lactates, hydroxides, organic acid salts, oxides of the metal elements, or mixtures thereof may be applied in combination.

The method for producing a catalyst for methane reformation according to an exemplary embodiment of the present application comprises preparing each of a first solution comprising an inorganic oxide or inorganic oxide precursor; and a second solution comprising a precursor of the perovskite-based compound represented by Chemical Formula 2.

The first solution and the second solution may each independently further comprise a solvent, and as the solvent, a solvent known in the art may be applied, and is not particularly limited thereto. Furthermore, the first solution may further comprise an organic dispersant, and as the organic dispersant, an organic dispersant known in the art may be applied, and is not particularly limited thereto. Further, the first solution comprising the inorganic oxide may have a pH of 1 to 5, and 1 to 3.

In addition, the first solution may comprise an inorganic oxide and may also comprise an inorganic oxide precursor such as a metal salt.

The method for producing a catalyst for methane reformation according to an exemplary embodiment of the present application comprises: producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process.

As the coating method of the first solution and the second solution, methods known in the art may be used, and dip-coating, wash-coating and the like may be used, but the method is not limited thereto.

The first heat treatment process and the second heat treatment process may each independently comprise performing drying and firing. The drying may be performed at a temperature of 50°C to 150°C for 1 hour to 48 hours, and may be performed at a temperature of 60°C to 100°C for 5 hours to 36 hours, but is not limited thereto. Further, the firing may be performed at a temperature of 350°C to 1100°C for 1 hour to 10 hours in an air atmosphere, and may be performed at a temperature of 500°C to 1,000°C for 1.5 hours to 8 hours in an air atmosphere, but is not limited thereto. When the firing is performed at a temperature less than 350°C, the perovskite phase may not be properly formed, and when the firing is performed at a temperature more than 1,100°C, the durability of the porous metal support may deteriorate, so that the temperature is not preferred.

In an exemplary embodiment of the present application, the method may further comprise measuring the weight of the catalyst supported on the porous metal support after the second heat treatment process. In addition, by measuring the weight of the catalyst supported on the porous metal support, the coating of the catalyst precursor with the first coating layer with the above-described second solution until a desired amount of catalyst is supported on the porous metal support, and then the performing of the second heat treatment process may be performed repeatedly once to 10 times until a desired amount of catalyst is supported on the porous metal support.

The catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming a first coating layer comprising an inorganic oxide.

In addition, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

Furthermore, the catalyst for methane reformation according to an exemplary embodiment of the present application is characterized by being able to additionally increase activity because there is a synergistic effect between a coated inorganic oxide and a perovskite-based compound represented by Chemical Formula 2.

Further, the catalyst for methane reformation according to an exemplary embodiment of the present application can exhibit high activity even at a high space velocity during a reforming reaction of methane because it is possible to increase the active surface area of the catalyst.

### [Mode for Invention]

Hereinafter, the present application will be described in detail with reference to Examples for specifically describing the present application. The Examples of the present application are provided for more completely explaining the present application to the person with ordinary skill in the art.

### <Examples>

### <Example 1>

### 1) Preparation of first solution

A suspension comprising 15 wt% of SiO₂ was prepared. In this case, the prepared inorganic oxide suspension had a pH of 1 to 3.

A solution comprising a precursor of a perovskite compound (SrTiO₃) was prepared by the citrate method. Strontium nitrate (Sr(NO₃)₃H₂O) was dissolved in distilled water together with citric acid and ethylene glycol. After titanium isopropoxide (Ti(OCH(CH₃)₂)₄) was dissolved in ethanol, the two solutions were mixed at 70°C. Thereafter, after the mixture was stirred for 3 hours, the mixture was cooled to room temperature and stored. In this case, the concentration of the solution was 0.1 M.

A mixed solution of a solution comprising a precursor of the perovskite compound (SrTiO₃) and an inorganic oxide suspension was prepared.

### 2) Preparation of second solution comprising precursor of perovskite-based compound (SrTi_{0.97}Ni_{0.03}O_{3-δ}, 0 < δ < 1) represented by Chemical Formula 2

A solution comprising a precursor of a perovskite compound (SrTi_{0.97}Ni_{0.03}O_{3-δ}) was prepared by the citrate method. Strontium nitrate (Sr(NO₃)₃H₂O) and nickel nitrate (Ni(NO₃)₂) were dissolved in distilled water together with citric acid and ethylene glycol. After titanium isopropoxide (Ti(OCH(CH₃)₂)₄) was dissolved in ethanol, the two solutions were mixed at 70°C. Thereafter, after the mixture was stirred for 3 hours, the mixture was cooled to room temperature and stored. In this case, the concentration of the solution was 0.1 M, and Ni was comprised in an amount of 3 mol% relative to Ti.

### 3) Production of catalyst for methane reformation

A porous metal support (NiCrAl, average pore size: 1,200 µm) was dip-coated with the first solution (formation of a first coating layer), and then dried at 70°C for 24 hours, and heat-treated at 300°C to 900°C in an air atmosphere for 3 hours.

Thereafter, the porous metal support in which the first coating layer was formed was dip-coated with the second solution (formation of a second coating layer), and then dried at 70°C for 24 hours, and heat-treated at 300°C to 900°C in an air atmosphere for 3 hours. The dip coating, drying and heat treatment of the second solution was repeated several times to finally produce a catalyst in which a first coating layer (SrTiO₃ + SiO₂) and a second coating layer (SrTi_{0.97}Ni_{0.03}O_{3-δ}, 0 < δ < 1) were provided on a porous metal support. Based on the total weight of the catalyst for methane reformation, the content of the first coating layer (SrTiO₃ + SiO₂) was 7 wt%, and the content of the perovskite-based compound (SrTi_{0.97}Ni_{0.03}O_{3-δ}, 0 < δ < 1) represented by Chemical Formula 2 was 20 wt%.

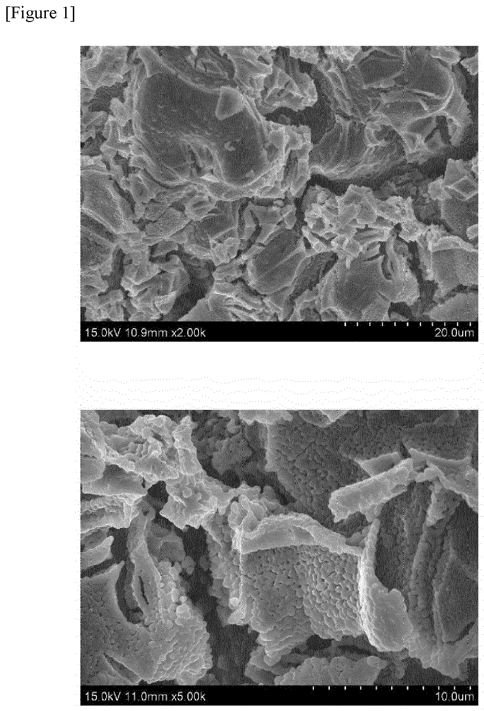

A set of electron microscope photographs of the surface of the catalyst for methane reformation according to Example 1 of the present application is illustrated in the following FIG. 1.

The content of the perovskite-based catalyst represented by Chemical Formula 1 or 2 may be calculated by the following Equation 1. 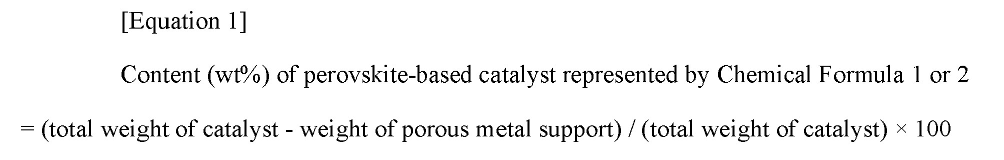 Content (wt%) of perovskite-based catalyst represented by Chemical Formula 1 or 2 = (total weight of catalyst - weight of porous metal support) / (total weight of catalyst) × 100

### <Example 2>

A process was performed in the same manner as in Example 1, except that nickel nitrate (Ni(NO₃)₂) was used in an amount of 5 mol% relative to titanium based on the metal during the preparation of the second solution.

### <Example 3>

A process was performed in the same manner as in Example 1, except that yttrium nitrate (Y(NO₃)₂) was added in an amount of 12 mol% relative to strontium based on the metal during the preparation of the second solution and nickel nitrate (Ni(NO₃)₂) was added such that the molar ratio of titanium : nickel became 0.80 : 0.20.

### <Example 4>

A process was performed in the same manner as in Example 1, except that yttrium nitrate (Y(NO₃)₂) was added in an amount of 8 mol% relative to strontium based on the metal and ruthenium chloride (RuCl₃) was added instead of nickel nitrate (Ni(NO₃)₂) such that the molar ratio of titanium : ruthenium became 0.80 : 0.15, during the preparation of the second solution.

### <Example 5>

A process was performed in the same manner as in Example 1, except that ZrO₂ was used instead of SiO₂ during the preparation of the first solution.

### <Example 6>

A process was performed in the same manner as in Example 2, except that ZrO₂ was used instead of SiO₂ during the preparation of the first solution.

### <Example 7>

A process was performed in the same manner as in Example 3, except that ZrO₂ was used instead of SiO₂ during the preparation of the first solution.

### <Example 8>

A process was performed in the same manner as in Example 4, except that ZrO₂ was used instead of SiO₂ during the preparation of the first solution.

### <Example 9>

A process was performed in the same manner as in Example 1, except that TiO₂ was used instead of SiO₂ during the preparation of the first solution.

### <Example 10>

A process was performed in the same manner as in Example 2, except that TiO₂ was used instead of SiO₂ during the preparation of the first solution.

### <Example 11>

A process was performed in the same manner as in Example 3, except that TiO₂ was used instead of SiO₂ during the preparation of the first solution.

### <Example 12>

A process was performed in the same manner as in Example 4, except that TiO₂ was used instead of SiO₂ during the preparation of the first solution.

### <Reference Example 13>

A process was performed in the same manner as in Example 3, except that Al₂O₃ was used instead of SiO₂ during the preparation of the first solution.

### <Example 14>

A process was performed in the same manner as in Example 1, except that the precursor of the perovskite-based compound (SrTiO₃) was excluded and the inorganic oxide suspension was used alone during the preparation of the first solution.

### <Example 15>

A process was performed in the same manner as in Example 3, except that the precursor of the perovskite-based compound (SrTiO₃) was excluded and the inorganic oxide suspension was used alone during the preparation of the first solution.

### <Example 16>

A process was performed in the same manner as in Example 5, except that the precursor of the perovskite-based compound (SrTiO₃) was excluded and the inorganic oxide suspension was used alone during the preparation of the first solution.

### <Example 17>

A process was performed in the same manner as in Example 7, except that the precursor of the perovskite-based compound (SrTiO₃) was excluded and the inorganic oxide suspension was used alone during the preparation of the first solution.

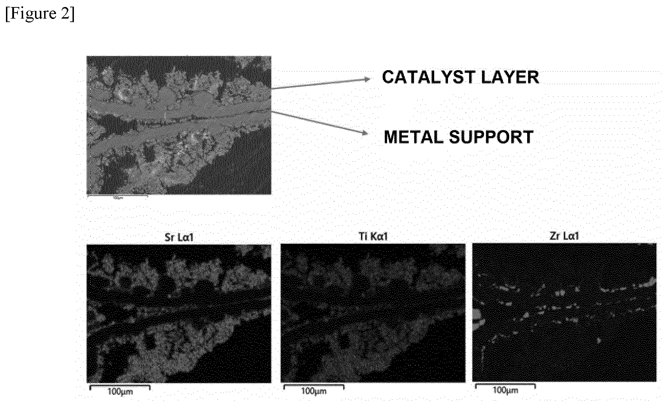

The SEM-EDS mapping results of the catalyst for methane reformation according to Example 17 are illustrated in the following FIG. 2. As shown in the result of the following FIG. 2, it can be confirmed that the Zr component is present as a coating layer on the skeleton surface of the porous metal support, and Sr and Ti, which are the main components of the perovskite-based compound represented by Chemical Formula 2, are present thereon.

### <Example 18>

A process was performed in the same manner as in Example 8, except that the precursor of the perovskite-based compound (SrTiO₃) was excluded and the inorganic oxide suspension was used alone during the preparation of the first solution.

### <Example 19>

A process was performed in the same manner as in Example 9, except that the precursor of the perovskite-based compound (SrTiO₃) was excluded and the inorganic oxide suspension was used alone during the preparation of the first solution.

### <Example 20>

A process was performed in the same manner as in Example 11, except that the precursor of the perovskite-based compound (SrTiO₃) was excluded and the inorganic oxide suspension was used alone during the preparation of the first solution.

### <Example 21>

A process was performed in the same manner as in Example 12, except that the precursor of the perovskite-based compound (SrTiO₃) was excluded and the inorganic oxide suspension was used alone during the preparation of the first solution.

### <Reference Example 22>

A process was performed in the same manner as in Example 13, except that the precursor of the perovskite-based compound (SrTiO₃) was excluded and the inorganic oxide suspension was used alone during the preparation of the first solution.

### <Example 23>

A process was performed in the same manner as in Example 15, except that the content of the first coating layer (SiO₂) was adjusted so as to be 1.7 wt% based on the total weight of the catalyst for methane reformation.

### <Example 24>

A process was performed in the same manner as in Example 15, except that the content of the first coating layer (SiO₂) was adjusted so as to be 13 wt% based on the total weight of the catalyst for methane reformation.

### <Example 25>

A process was performed in the same manner as in Example 15, except that the content of the first coating layer (SiO₂) was adjusted so as to be 17 wt% based on the total weight of the catalyst for methane reformation.

### <Example 26>

A process was performed in the same manner as in Example 18, except that ruthenium chloride (RuCl₃) was added such that the molar ratio of titanium : ruthenium became 0.85 : 0.15 during the preparation of the second solution.

### <Reference Example 27>

A process was performed in the same manner as in Example 22, except that ruthenium chloride (RuCl₃) was added such that the molar ratio of titanium : ruthenium became 0.85 : 0.15 during the preparation of the second solution.

### <Example 28>

A process was performed in the same manner as in Example 3, except that as the porous metal support, NiFeCrAl (average pore size: 1,200 µm) was applied instead of NiCrAl.

### <Example 29>

A process was performed in the same manner as in Example 7, except that as the porous metal support, NiFeCrAl (average pore size: 1,200 µm) was applied instead of NiCrAl.

### <Example 30>

A process was performed in the same manner as in Example 11, except that as the porous metal support, NiFeCrAl (average pore size: 1,200 µm) was applied instead of NiCrAl.

### <Example 31>

A process was performed in the same manner as in Example 7, except that as the porous metal support, NiCrAl 800 (average pore size: 800 µm) was applied instead of NiCrAl.

### <Example 32>

A process was performed in the same manner as in Example 7, except that as the porous metal support, NiCrAl_1500 (average pore size: 1,500 µm) was applied instead of NiCrAl.

### <Comparative Example 1>

A porous metal support (NiCrAl, average pore size: 1,200 µm) alone was used as Comparative Example 1.

### <Comparative Example 2>

A process was performed in the same manner as in Example 1, except that the coating with the first solution alone was applied without the coating with the second solution.

### <Comparative Example 3>

A process was performed in the same manner as in Example 16, except that the coating of the porous metal support with the first solution alone was applied without the coating of the catalyst precursor with the second solution.

### <Comparative Example 4>

A process was performed in the same manner as in Example 16, except that the coating of the catalyst precursor with the second solution alone was applied without the coating of the porous metal support with the first solution.

### <Comparative Example 5>

A process was performed in the same manner as in Example 3, except that the coating of the catalyst precursor with the second solution alone was applied without the coating of the porous metal support with the first solution.

The configurations of the porous metal supports, the first coating layer and the second coating layer in the Examples and Comparative Examples are shown in the following Table 1.

**[Table 1]**

| | Porous metal support | First coating layer | Second coating layer |
|---|---|---|---|
| Example 1 | NiCrAl | SrTiO₃ + SiO₂ | SrTi_{0.97}Ni_{0.03}O_{3-δ} |
| Example 2 | NiCrAl | SrTiO₃ + SiO₂ | SrTi_{0.95}Ni_{0.05}O_{3-δ} |
| Example 3 | NiCrAl | SrTiO₃ + SiO₂ | Sr_{0.88}Y_{0.12}Ti_{0.80}Ni_{0.20}O_{3-δ} |
| Example 4 | NiCrAl | SrTiO₃ + SiO₂ | Sr_{0.92}Y_{0.08}Ti_{0.80}Ru_{0.15}O_{3-δ} |
| Example 5 | NiCrAl | SrTiO₃ + ZrO₂ | SrTi_{0.97}Ni_{0.03}O_{3-δ} |
| Example 6 | NiCrAl | SrTiO₃ + ZrO₂ | SrTi_{0.95}Ni_{0.05}O_{3-δ} |
| Example 7 | NiCrAl | SrTiO₃ + ZrO₂ | Sr_{0.88}Y_{0.12}Ti_{0.80}Ni_{0.20}O_{3-δ} |
| Example 8 | NiCrAl | SrTiO₃ + ZrO₂ | Sr_{0.92}Y_{0.08}Ti_{0.80}Ru_{0.15}O_{3-δ} |
| Example 9 | NiCrAl | SrTiO₃ + TiO₂ | SrTi_{0.97}Ni_{0.03}O_{3-δ} |
| Example 10 | NiCrAl | SrTiO₃ + TiO₂ | SrTi_{0.95}Ni_{0.05}O_{3-δ} |
| Example 11 | NiCrAl | SrTiO₃ + TiO₂ | Sr_{0.88}Y_{0.12}Ti_{0.80}Ni_{0.20}O_{3-δ} |
| Example 12 | NiCrAl | SrTiO₃ + TiO₂ | Sr_{0.92}Y_{0.08}Ti_{0.80}Ru_{0.15}O_{3-δ} |
| Reference Example 13 | NiCrAl | SrTiO₃ + Al₂O₃ | Sr_{0.88}Y_{0.12}Ti_{0.80}Ni_{0.20}O_{3-δ} |
| Example 14 | NiCrAl | SiO₂ | SrTi_{0.97}Ni_{0.03}O_{3-δ} |
| Example 15 | NiCrAl | SiO₂ | Sr_{0.88}Y_{0.12}Ti_{0.80}Ni_{0.20}O_{3-δ} |
| Example 16 | NiCrAl | ZrO₂ | SrTi_{0.97}Ni_{0.03}O_{3-δ} |
| Example 17 | NiCrAl | ZrO₂ | Sr_{0.88}Y_{0.12}Ti_{0.80}Ni_{0.20}O_{3-δ} |
| Example 18 | NiCrAl | ZrO₂ | Sr_{0.92}Y_{0.08}Ti_{0.80}Ru_{0.15}O_{3-δ} |
| Example 19 | NiCrAl | TiO₂ | SrTi_{0.97}Ni_{0.03}O_{3-δ} |
| Example 20 | NiCrAl | TiO₂ | Sr_{0.88}Y_{0.12}Ti_{0.80}Ni_{0.20}O_{3-δ} |
| Example 21 | NiCrAl | TiO₂ | Sr_{0.92}Y_{0.08}Ti_{0.80}Ru_{0.15}O_{3-δ} |
| Reference Example 22 | NiCrAl | Al₂O₃ | Sr_{0.88}Y_{0.12}Ti_{0.80}Ni_{0.20}O_{3-δ} |
| Example 23 | NiCrAl | SiO₂ | Sr_{0.88}Y_{0.12}Ti_{0.80}Ni_{0.20}O_{3-δ} |
| Example 24 | NiCrAl | SiO₂ | Sr_{0.88}Y_{0.12}Ti_{0.80}Ni_{0.20}O_{3-δ} |
| Example 25 | NiCrAl | SiO₂ | Sr_{0.88}Y_{0.12}Ti_{0.80}Ni_{0.20}O_{3-δ} |
| Example 26 | NiCrAl | ZrO₂ | Sr_{0.92}Y_{0.08}Ti_{0.85}Ru_{0.15}O_{3-δ} |
| Reference Example 27 | NiCrAl | Al₂O₃ | Sr_{0.92}Y_{0.08}Ti_{0.85}Ru_{0.15}O_{3-δ} |
| Example 28 | NiFeCrAl | SrTiO₃ + SiO₂ | Sr_{0.88}Y_{0.12}Ti_{0.80}Ni_{0.20}O_{3-δ} |
| Example 29 | NiFeCrAl | SrTiO₃ + ZrO₂ | Sr_{0.88}Y_{0.12}Ti_{0.80}Ni_{0.20}O_{3-δ} |
| Example 30 | NiFeCrAl | SrTiO₃ + TiO₂ | Sr_{0.88}Y_{0.12}Ti_{0.80}Ni_{0.20}O_{3-δ} |
| Example 31 | NiCrAl_800 | SrTiO₃ + ZrO₂ | Sr_{0.88}Y_{0.12}Ti_{0.80}Ni_{0.20}O_{3-δ} |
| Example 32 | NiCrAl_1500 | SrTiO₃ + ZrO₂ | Sr_{0.88}Y_{0.12}Ti_{0.80}Ni_{0.20}O_{3-δ} |
| Comparative Example 1 | NiCrAl | - | - |
| Comparative Example 2 | NiCrAl | SrTiO₃ + SiO₂ | - |
| Comparative Example 3 | NiCrAl | ZrO₂ | - |
| Comparative Example 4 | NiCrAl | - | SrTi_{0.97}Ni_{0.03}O_{3-δ} |
| Comparative Example 5 | NiCrAl | - | Sr_{0.88}Y_{0.12}Ti_{0.80}Ni_{0.20}O_{3-δ} |

### <Experimental Example 1> Evaluation of dry reforming reaction of methane

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% H₂/N₂ conditions for 1 hour to 2 hours, a catalytic reaction was performed for 100 hours. In order to more clearly compare the difference in activity between the catalysts, the activity characteristics of the catalysts were evaluated at severe space velocities.
Gas composition: CH₄ : CO₂ : N₂ = 1 : 1.2 : 0.96
Flow rate: gas hour space velocity (GHSV) = 2,500 hr⁻¹ (based on CH₄)
Reaction temperature: 750°C
Reaction pressure: 1 bar

A reaction conversion rate after 100 hours of reaction was calculated by analyzing the composition of the produced gas using gas chromatography (GC), and is shown in the following Table 2. $Conversion rate \left(Xi, %\right) = \left[\left({Fi}_{in}-{Fi}_{out}\right)/{Fi}_{in}\right] \times 100 \left(Fi=flow rate of i\right)$

### <GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

**[Table 2]**

| Catalyst type | GHSV(hr⁻¹) | CH₄ conversion rate (%) | CO₂ conversion rate (%) | H₂/CO |
|---|---|---|---|---|
| Example 1 | 2,500 | 57 | 60 | 0.75 |
| Example 2 | 2,500 | 58 | 62 | 0.74 |
| Example 3 | 2,500 | 69 | 73 | 0.79 |
| Example 4 | 2,500 | 67 | 73 | 0.78 |
| Example 5 | 2,500 | 58.3 | 72 | 0.74 |
| Example 6 | 2,500 | 60 | 63 | 0.76 |
| Example 7 | 2,500 | 74 | 81 | 0.80 |
| Example 8 | 2,500 | 72 | 81 | 0.81 |
| Example 9 | 2,500 | 57 | 63 | 0.74 |
| Example 10 | 2,500 | 59 | 63 | 0.76 |
| Example 11 | 2,500 | 67.5 | 71 | 0.77 |
| Example 12 | 2,500 | 67 | 72 | 0.78 |
| Reference Example 13 | 2,500 | 67 | 72 | 0.78 |
| Example 14 | 2,500 | 61 | 65 | 0.76 |
| Example 15 | 2,500 | 69 | 72 | 0.78 |
| Example 16 | 2,500 | 62 | 70 | 0.75 |
| Example 17 | 2,500 | 74.2 | 82 | 0.81 |
| Example 18 | 2,500 | 72 | 81 | 0.80 |
| Example 19 | 2,500 | 60 | 65 | 0.75 |
| Example 20 | 2,500 | 67 | 71 | 0.77 |
| Example 21 | 2,500 | 68 | 73 | 0.78 |
| Reference Example 22 | 2,500 | 67 | 72 | 0.75 |
| Example 23 | 2,500 | 63 | 67 | 0.74 |
| Example 24 | 2,500 | 71 | 79 | 0.80 |
| Example 25 | 2,500 | 64 | 69 | 0.75 |
| Comparative Example 1 | 2,500 | 18 | 20 | 0.54 |
| Comparative Example 2 | 2,500 | 3 | 4 | 0.20 |
| Comparative Example 3 | 2,500 | 0 | 0 | - |
| Comparative Example 4 | 2,500 | 42 | 54 | 0.73 |
| Comparative Example 5 | 2,500 | 50 | 58 | 0.72 |

### <Experimental Example 2> Evaluation of dry reforming reaction of methane

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% H₂/N₂ conditions for 1 hour to 2 hours, a catalytic reaction was performed for 100 hours.
Gas composition: CH₄ : CO₂ : N₂ = 1 : 1.2 : 0.96
Flow rate: gas hour space velocity (GHSV) = 1,500 hr⁻¹ (based on CH₄)
Reaction temperature: 800°C
Reaction pressure: 1 bar

A reaction conversion rate after 100 hours of reaction was calculated by analyzing the composition of the produced gas using gas chromatography (GC), and is shown in the following Table 3. $Conversion rate \left(Xi, %\right) = \left[\left({Fi}_{in}-{Fi}_{out}\right)/{Fi}_{in}\right] \times 100 \left(Fi=flow rate of i\right)$

### <GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

**[Table 3]**

| Catalyst type | GHSV(hr⁻¹) | CH₄ conversion rate (%) | CO₂ conversion rate (%) | H₂/CO |
|---|---|---|---|---|
| Example 3 | 1,500 | 92 | 90 | 0.84 |
| Example 7 | 1,500 | 93 | 91 | 0.85 |
| Example 11 | 1,500 | 92 | 90 | 0.85 |
| Example 15 | 1,500 | 92 | 89 | 0.85 |
| Example 17 | 1,500 | 94 | 91 | 0.85 |
| Example 20 | 1,500 | 91 | 90 | 0.84 |
| Example 26 | 1,500 | 93 | 91 | 0.87 |
| Reference Example 27 | 1,500 | 91 | 88 | 0.85 |
| Example 28 | 1,500 | 91 | 89 | 0.84 |
| Example 29 | 1,500 | 93 | 91 | 0.85 |
| Example 30 | 1,500 | 93 | 90 | 0.85 |
| Example 31 | 1,500 | 95 | 92 | 0.87 |
| Example 32 | 1,500 | 90 | 89 | 0.83 |
| Comparative Example 1 | 1,500 | 20 | 23 | 0.54 |
| Comparative Example 2 | 1,500 | 3 | 4 | 0.20 |
| Comparative Example 3 | 1,500 | 0 | 0 | - |
| Comparative Example 4 | 1,500 | 87 | 88 | 0.82 |

As in the results of Tables 2 and 3, it can be confirmed that the catalyst for methane reformation, which comprises the porous metal support according to the present invention, a first coating layer comprising an inorganic oxide, and a second coating layer comprising the perovskite-based compound represented by Chemical Formula 2 have excellent CH₄ conversion rate and CO₂ conversion rate compared to the Comparative Examples which do not comprise this configuration.

In addition, it can be confirmed that in the Examples of the present application, the ratio of H₂/CO can be improved compared to the Comparative Examples. Accordingly, it can be confirmed that side reactions caused by the porous metal support are reduced in the Examples of the present application.

### <Experimental Example 3> Evaluation of mixed reforming reaction of methane

A fixed-bed reactor system was introduced to carry out a mixed reforming reaction of methane. A quartz tube reactor (inner diameter = 1/2 inch, length = 50 cm) was used and packed with the catalyst (about 2 g) of Example 17. First, after the catalyst underwent a reduction process at 800°C under 10% H₂/N₂ conditions for 1 hour to 2 hours, a catalytic reaction was performed for 100 hours.
Gas composition: CH₄ : H₂O : CO₂ = 1 : 0.8 : 0.4
Flow rate: gas hour space velocity (GHSV) = 1,500 h⁻¹
Reaction temperature: 800°C
Reaction pressure: 1 bar

A reaction conversion rate after 100 hours of reaction was calculated by using gas chromatography (GC) to analyze the composition of produced gases, and as a result, a result in which a CH₄ conversion rate was 93%, a CO₂ conversion rate was 68%, and H₂/CO = 1.9 was obtained. $Conversion rate \left(Xi, %\right) = \left[\left({Fi}_{in}-{Fi}_{out}\right)/{Fi}_{in}\right] \times 100 \left(Fi=flow rate of i\right)$

### <GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

As in the aforementioned results, the catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming a first coating layer comprising an inorganic oxide.

Furthermore, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

Further, the catalyst for methane reformation according to an exemplary embodiment of the present application is characterized by being able to additionally increase activity because there is a synergistic effect between a coated inorganic oxide and a perovskite-based compound represented by Chemical Formula 2.

In addition, the catalyst for methane reformation according to an exemplary embodiment of the present application can exhibit high activity even at a high space velocity during a reforming reaction of methane because it is possible to increase the active surface area of the catalyst.

## Claims

1. A catalyst for methane reformation, comprising:
a porous metal support;
a first coating layer provided on the porous metal support and comprising an inorganic oxide; and
a second coating layer provided on the first coating layer and comprising a perovskite-based compound represented by the following Chemical Formula 2,
wherein the porous metal support is a metal foam comprising NiFeCrAl or NiCrAl, and
wherein the first coating layer further comprises SrTiO₃; or the inorganic oxide comprise one or more of TiO₂, SiO₂ and ZrO₂:
[Chemical Formula 2] Sr₁₋ₓAₓTi_{α}B_{y}O_{3-δ}
wherein, in Chemical Formula 2,
A is selected from Y, Sc, La and lanthanide series elements,
B is Ni, Co, Fe, Mn, Cr, Mo, Ru or Rh,
x is a real number of 0 or more and less than 1,
y is a real number of 0 or more and less than 0.3,
δ is a real number of 0 or more and less than 1,
α is a real number of more than 0.7 and 1 or less, and
(x + y) > 0 is satisfied.

2. The catalyst of claim 1, wherein Chemical Formula 2 is represented by the following Chemical Formula 3 or 4:
[Chemical Formula 3] SrTi_{α}B_{y}O_{3-δ}
[Chemical Formula 4] Sr₁₋ₓYₓTi_{α}B_{y}O_{3-δ}
in Chemical Formulae 3 and 4,
B is Ni or Ru,
x is a real number of more than 0 and less than 1,
y is a real number of more than 0 and less than 0.3, and
δ is a real number of more than 0 and less than 1, and
α is a real number of more than 0.7 and 1 or less.

3. The catalyst of claim 1, wherein a content of the perovskite-based compound represented by Chemical Formula 2 is 3 wt% to 40 wt% based on a total weight of the catalyst for methane reformation.

4. The catalyst of claim 1, wherein the catalyst for methane reformation is applied to a steam reforming process, a carbon dioxide (CO₂) reforming process, a catalytic partial oxidation process, an autothermal reforming process, a tri-reforming process or a mixed reforming process.

5. A method for producing a catalyst for methane reformation, the method comprising:
preparing each of a first solution comprising an inorganic oxide or inorganic oxide precursor; and a second solution comprising a precursor of a perovskite-based compound represented by the following Chemical Formula 2;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process,
wherein the porous metal support is a metal foam comprising NiFeCrAl or NiCrAl, and
wherein the first coating layer further comprises SrTiO₃; or the inorganic oxide comprise one or more of TiO₂, SiO₂ and ZrO₂:
[Chemical Formula 2] Sr₁₋ₓAₓTi_{α}B_{y}O_{3-δ}
wherein, in Chemical Formula 2,
A is selected from Y, Sc, La and lanthanide series elements,
B is Ni, Co, Fe, Mn, Cr, Mo, Ru or Rh,
x is a real number of 0 or more and less than 1,
y is a real number of 0 or more and less than 0.3,
δ is a real number of 0 or more and less than 1,
α is a real number of more than 0.7 and 1 or less, and
(x + y) > 0 is satisfied.

6. The method of claim 5, wherein Chemical Formula 2 is represented by the following Chemical Formula 3 or 4:
[Chemical Formula 3] SrTi_{α}B_{y}O_{3-δ}
[Chemical Formula 4] Sr₁₋ₓYₓTi_{α}B_{y}O_{3-δ}
in Chemical Formulae 3 and 4,
B is Ni or Ru,
x is a real number of more than 0 and less than 1,
y is a real number of more than 0 and less than 0.3, and
δ is a real number of more than 0 and less than 1, and
α is a real number of more than 0.7 and 1 or less.

## Patentansprüche

1. Katalysator zur Methanreformierung, umfassend:
einen porösen Metallträger;
eine erste Beschichtungsschicht, die auf dem porösen Metallträger bereitgestellt ist und ein anorganisches Oxid umfasst; und
eine zweite Beschichtungsschicht, die auf der ersten Beschichtungsschicht bereitgestellt ist und eine Perowskit-basierte Verbindung umfasst, die durch die folgende chemische Formel 2 dargestellt ist,
wobei der poröse Metallträger ein Metallschaum ist, der NiFeCrAl oder NiCrAl umfasst, und
wobei die erste Beschichtungsschicht ferner SrTiO₃ umfasst; oder das anorganische Oxid eines oder mehrere von TiO₂, SiO₂ und ZrO₂ umfasst:
[Chemische Formel 2] Sr₁₋ₓAₓTi_{α}B_{y}O_{3-δ}
wobei in der chemischen Formel 2
A aus Y, Sc, La und Elementen der Lanthanidreihe ausgewählt ist,
B Ni, Co, Fe, Mn, Cr, Mo, Ru oder Rh ist,
x eine reelle Zahl von 0 oder mehr und weniger als 1 ist,
y eine reelle Zahl von 0 oder mehr und weniger als 0,3 ist,
δ eine reelle Zahl von 0 oder mehr und weniger als 1 ist,
α eine reelle Zahl von mehr als 0,7 und 1 oder weniger ist, und
(x + y) > 0 erfüllt ist.

2. Katalysator nach Anspruch 1, bei dem die chemische Formel 2 durch die folgende chemische Formel 3 oder 4 dargestellt ist:
[Chemische Formel 3] SrTi_{α}B_{y}O_{3-δ}
[Chemische Formel 4] Sr₁₋ₓYₓTi_{α}B_{y}O_{3-δ}
wobei in den chemischen Formeln 3 und 4
B Ni oder Ru ist,
x eine reelle Zahl von mehr als 0 und weniger als 1 ist,
y eine reelle Zahl von mehr als 0 und weniger als 0,3 ist, und
δ eine reelle Zahl von mehr als 0 und weniger als 1 ist, und
α eine reelle Zahl von mehr als 0,7 und 1 oder weniger ist.

3. Katalysator nach Anspruch 1, bei dem ein Gehalt der Perowskit-basierten Verbindung, die durch die chemische Formel 2 dargestellt ist, 3 Gew.-% bis 40 Gew.-%, bezogen auf ein Gesamtgewicht des Katalysators zur Methanreformierung, beträgt.

4. Katalysator nach Anspruch 1, bei dem der Katalysator zur Methanreformierung auf ein Dampfreformierungsverfahren, ein Kohlendioxid(CO₂)-Reformierungsverfahren, ein katalytisches partielles Oxidationsverfahren, ein autothermes Reformierungsverfahren, ein Trireformierungsverfahren oder ein gemischtes Reformierungsverfahren angewendet wird.

5. Verfahren zur Herstellung eines Katalysators zur Methanreformierung, wobei das Verfahren umfasst:
Herstellen jeweils einer ersten Lösung, die ein anorganisches Oxid oder einen anorganischen Oxidvorläufer umfasst; und einer zweiten Lösung, die einen Vorläufer einer Perowskit-basierten Verbindung umfasst, die durch die folgende chemische Formel 2 dargestellt ist;
Herstellen eines Katalysatorvorläufers, der mit einer ersten Beschichtungsschicht bereitgestellt ist, durch Beschichten eines porösen Metallträgers mit der ersten Lösung und dann Durchführen eines ersten Wärmebehandlungsverfahrens; und
Herstellen eines Katalysators, der mit einer zweiten Beschichtungsschicht bereitgestellt ist, durch Beschichten des Katalysatorvorläufers, der mit der ersten Beschichtungsschicht bereitgestellt ist, mit der zweiten Lösung und dann Durchführen eines zweiten Wärmebehandlungsverfahrens,
wobei der poröse Metallträger ein Metallschaum ist, der NiFeCrAl oder NiCrAl umfasst, und
wobei die erste Beschichtungsschicht ferner SrTiO₃ umfasst; oder das anorganische Oxid eines oder mehrere von TiO₂, SiO₂ und ZrO₂ umfasst:
[Chemische Formel 2] Sr₁₋ₓAₓTi_{α}B_{y}O_{3-δ}
wobei in der chemischen Formel 2
A aus Y, Sc, La und Elementen der Lanthanidreihe ausgewählt ist,
B Ni, Co, Fe, Mn, Cr, Mo, Ru oder Rh ist,
x eine reelle Zahl von 0 oder mehr und weniger als 1 ist,
y eine reelle Zahl von 0 oder mehr und weniger als 0,3 ist,
δ eine reelle Zahl von 0 oder mehr und weniger als 1 ist,
α eine reelle Zahl von mehr als 0,7 und 1 oder weniger ist, und
(x + y) > 0 erfüllt ist.

6. Verfahren nach Anspruch 5, bei dem die chemische Formel 2 durch die folgende chemische Formel 3 oder 4 dargestellt ist:
[Chemische Formel 3] SrTi_{α}B_{y}O_{3-δ}
[Chemische Formel 4] Sr₁₋ₓYₓTi_{α}B_{y}O_{3-δ}
wobei in den chemischen Formeln 3 und 4
B Ni oder Ru ist,
x eine reelle Zahl von mehr als 0 und weniger als 1 ist,
y eine reelle Zahl von mehr als 0 und weniger als 0,3 ist, und
δ eine reelle Zahl von mehr als 0 und weniger als 1 ist, und
α eine reelle Zahl von mehr als 0,7 und 1 oder weniger ist.

## Revendications

1. Catalyseur pour le reformage du méthane, comprenant :
un support métallique poreux ;
une première couche de revêtement fournie sur le support métallique poreux et comprenant un oxyde inorganique ; et
une deuxième couche de revêtement fournie sur la première couche de revêtement et comprenant un composé à base de pérovskite représenté par la Formule chimique 2 ci-après,
dans lequel le support métallique poreux est une mousse métallique comprenant NiFeCrAl ou NiCrAl, et
dans lequel la première couche de revêtement comprend en outre SrTiO₃ ; ou l'oxyde inorganique comprend un ou plusieurs éléments parmi TiO₂, SiO₂ et ZrO₂ :
[Formule chimique 2] Sr₁₋ₓAₓTi_{α}B_{y}O_{3-δ}
dans lequel, dans la Formule chimique 2,
A est sélectionné parmi Y, Sc, La et des éléments de la série des lanthanides,
B est Ni, Co, Fe, Mn, Cr, Mo, Ru ou Rh,
x est un nombre réel égal ou supérieur à 0 et inférieur à 1,
y est un nombre réel égal ou supérieur à 0 et inférieur à 0,3,
δ est un nombre réel égal ou supérieur à 0 et inférieur à 1,
α est un nombre réel supérieur à 0,7 et égal ou inférieur à 1, et
(x + y) > 0 est satisfait.

2. Catalyseur selon la revendication 1, dans lequel la Formule chimique 2 est représentée par la Formule chimique 3 ou 4 ci-après :
[Formule chimique 3] SrTi_{α}B_{y}O_{3-δ}
[Formule chimique 4] Sr₁₋ₓYₓTi_{α}B_{y}O_{3-δ}
dans les Formules chimiques 3 et 4,
B est Ni ou Ru,
x est un nombre réel supérieur à 0 et inférieur à 1,
y est un nombre réel supérieur à 0 et inférieur à 0,3, et
δ est un nombre réel supérieur à 0 et inférieur à 1, et
α est un nombre réel supérieur à 0,7 et égal ou inférieur à 1.

3. Catalyseur selon la revendication 1, dans lequel une teneur du composé à base de pérovskite représenté par la Formule chimique 2 est 3 % en poids à 40 % en poids sur la base d'un poids total du catalyseur pour le reformage du méthane.

4. Catalyseur selon la revendication 1, dans lequel le catalyseur pour le reformage du méthane est appliqué à un processus de reformage à la vapeur, un processus de reformage au dioxyde de carbone (CO₂), un processus d'oxydation catalytique partielle, un processus de reformage autothermique, un processus de tri-reformage ou un processus de reformage mixte.

5. Procédé de production d'un catalyseur pour le reformage du méthane, le procédé consistant à :
préparer une première solution comprenant un oxyde inorganique ou un précurseur d'oxyde inorganique ; et une deuxième solution comprenant un précurseur d'un composé à base de pérovskite représenté par la Formule chimique 2 ci-après ;
produire un précurseur de catalyseur muni d'une première couche de revêtement en revêtant un support métallique poreux avec la première solution, puis en effectuant un premier processus de traitement thermique ; et
produire un catalyseur muni d'une deuxième couche de revêtement en revêtant le précurseur de catalyseur muni de la première couche de revêtement avec la deuxième solution, puis en effectuant un deuxième processus de traitement thermique,
dans lequel le support métallique poreux est une mousse métallique comprenant NiFeCrAl ou NiCrAl, et
dans lequel la première couche de revêtement comprend en outre SrTiO₃ ; ou l'oxyde inorganique comprend un ou plusieurs éléments parmi TiO₂, SiO₂ et ZrO₂ :
[Formule chimique 2] Sr₁₋ₓAₓTi_{α}B_{y}O_{3-δ}
dans lequel, dans la Formule chimique 2,
A est sélectionné parmi Y, Sc, La et des éléments de la série des lanthanides,
B est Ni, Co, Fe, Mn, Cr, Mo, Ru ou Rh,
x est un nombre réel égal ou supérieur à 0 et inférieur à 1,
y est un nombre réel égal ou supérieur à 0 et inférieur à 0,3,
δ est un nombre réel égal ou supérieur à 0 et inférieur à 1,
α est un nombre réel supérieur à 0,7 et égal ou inférieur à 1, et
(x + y) > 0 est satisfait.

6. Procédé selon la revendication 5, dans lequel la Formule chimique 2 est représentée par la Formule chimique 3 ou 4 ci-après :
[Formule chimique 3] SrTi_{α}B_{y}O_{3-δ}
[Formule chimique 4] Sr₁₋ₓYₓTi_{α}B_{y}O_{3-δ}
dans les Formules chimiques 3 et 4,
B est Ni ou Ru,
x est un nombre réel supérieur à 0 et inférieur à 1,
y est un nombre réel supérieur à 0 et inférieur à 0,3, et
δ est un nombre réel supérieur à 0 et inférieur à 1, et
α est un nombre réel supérieur à 0,7 et égal ou inférieur à 1.
